(19)

Europäisches
Patentamt
European
Patent Office
Office européen
des brevets

(11) **EP 4 583 002 A1**

(12) **EUROPEAN PATENT APPLICATION**

(43) Date of publication:
**09.07.2025 Bulletin 2025/28**

(21) Application number: **24185381.1**

(22) Date of filing: **28.06.2024**

(51) International Patent Classification (IPC):
**G06N 3/044** (2023.01)   **G06N 3/045** (2023.01)
**G06N 3/0464** (2023.01)   **G06N 3/0475** (2023.01)
**G06N 3/0495** (2023.01)   **G06N 3/084** (2023.01)
**G06N 3/0985** (2023.01)

(52) Cooperative Patent Classification (CPC):
**G06N 3/045; G06N 3/044; G06N 3/0464;**
**G06N 3/0475; G06N 3/0495; G06N 3/084;**
**G06N 3/0985**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **05.01.2024 KR 20240002001**

(71) Applicant: **Samsung Electronics Co., Ltd.**
**Suwon-si, Gyeonggi-do 16677 (KR)**

(72) Inventors:
• **SAGONG, Donghoon**
**16678 Suwon-si (KR)**
• **KANG, Nahyup**
**16678 Suwon-si (KR)**
• **AHN, Young Chun**
**16678 Suwon-si (KR)**

(74) Representative: **Arnold & Siedsma**
**Bezuidenhoutseweg 57**
**2594 AC The Hague (NL)**

(54) **DEVICE AND METHOD TO ADAPTIVELY LIGHTEN MACHINE LEARNING MODEL**

(57)    Provided is a device for lightening a machine learning model. An electronic device according to an example embodiment may transform original parameters of an original machine learning model according to a lightweighting level based on a parameter transformation model. The electronic device may generate a lightweight model using the transformed parameters. The electronic device may perform an inference operation using the generated lightweight model.

EP 4 583 002 A1

FIG. 2

**Description**

BACKGROUND

**1. Field**

Aspects of the disclosure relate to a device and a method for adaptive lightweighting of a machine learning model.

**2. Description of Related Art**

Recently, various processes, such as object recognition, audio recognition, etc., may be implemented through processor-implemented neural network models, as specialized computational architectures which, after substantial training, may provide computationally intuitive mappings between input patterns and output patterns. The trained capability of generating such mappings may be referred to as a learning capability of a neural network. Moreover, such a specially trained neural network may have a generalization capability of generating a relatively accurate output with respect to an input pattern that the neural network may not have been specifically trained for to the input pattern type.

SUMMARY

According to an aspect of the disclosure, there is provided a processor-implemented method, including: obtaining a first parameter of a first machine learning model; obtaining a second parameter by transforming the first parameter based on a parameter transformation model according to a lightweighting level; generating a second machine learning model, based on the second parameter, by replacing one or more layers of the first machine learning model with a lightweight layer according to the lightweighting level; and performing an inference operation using the generated second machine learning model.

The method proposed in the present disclosure searches for an optimal layer on which transformation (lightweighting) is to be performed, during training with data. Among all the layers of the neural network model, an optimal layer that can reduce the computation amount while maintaining inference accuracy as much as possible during lightweighting (transformation) is found, and the found layer is transformed into a depthwise separable (DS) convolution layer. According to the present disclosure, by performing this search for such an optimal layer, a greater reduction in the computation amount can be achieved while minimizing the decrease in accuracy.

The first machine learning model includes: a first convolutional layer, and the second machine learning model includes: a second convolutional layer that is lighter than the first convolutional layer.

The second convolutional layer may have a smaller number of kernel weights than the first convolutional layer.

The first convolutional layer may be a standard convolutional layer, and the second convolutional layer may be a depthwise separable (DS) convolutional layer.

The obtaining of the first parameter may include: identifying the first machine learning model as a model required by an application; selecting a standard convolutional layer from a plurality of layers of the first machine learning model; and determining the first parameter of the selected standard convolutional layer.

The method may further include determining the lightweighting level based on an available resource of an electronic device that is to perform the inference operation.

The method may further include identifying the first machine learning model as a model required by an application; and determining the lightweighting level based on a memory usage required for implementing the first machine learning model and an available memory of an electronic device at a time point of execution of the application.

The method may further include: obtaining, from the lightweighting level and a plurality of first layers of the first machine learning model, information indicative of a layer to be lightened among the plurality of first layers and the second parameter to be applied to the layer to be lightened, based on the parameter transformation model.

The first parameter may be selected based on an input indicative of a layer to be lightened among a plurality of first layers of the first machine learning model.

The generating may include: setting the second parameter in the lightweight layer, which replaces a first layer of the first machine learning model.

The parameter transformation model may include at least one of: a neural network of a multi-layer perceptron (MLP) structure configured to output the second parameter from the first parameter; a neural network including an encoder portion configured to output feature data from the first parameter and a decoder portion configured to output the second parameter from the feature data; or a recurrent neural network (RNN) configured to output the second parameter for a corresponding first layer based on sequentially receiving first parameters of a plurality of first layers together with information of a previous layer of each first layer.

The second parameter may be determined by providing, to the parameter transformation model, first parameters of a plurality of convolutional layers selected from the first machine learning model, in a unit of a single layer or a plurality of layers.

The performing of the inference operation may include: generating a high-resolution output image from a low-resolution input image using the second machine learning model.

According to another embodiment of the disclosure, there is provided a processor-implemented method, including: at each iteration of training, selecting, based on a path selection parameter, a first path along a first layer of a first machine learning model and a second path along a lightweight layer added to the first layer as a selected path; updating a parameter of a layer included in the selected path and the path selection parameter, using a first objective value calculated based on a temporary output obtained by propagating a training input along the selected path and on a ground truth (GT) and a second objective value calculated based on a temporary computation amount and a target computation amount according to the selected path; determining a lightweight parameter converged by the updating of the lightweight layer in the target computation amount as a GT lightweight parameter according to a lightweighting level corresponding to the target computation amount with respect to a first parameter of the first machine learning model; and training a parameter transformation model to output the GT lightweight parameter determined for the lightweighting level from the first parameter.

The selecting of the selected path may include: selecting a path along one of a first branch and a lightweight branch based on a result of a binarization performed on the path selection parameter, and wherein the method may further include determining the lightweighting level based on the result of the binarization performed on the path selection parameter.

The selecting of the path may include: performing the binarization in which a parameter having a great value among path selection parameters respectively corresponding to a plurality of branches is determined to be 1 and a remaining parameter is determined to be 0; and selecting a path corresponding to the parameter having a value of 1.

The path selection parameter may include: a first selection parameter indicative of selecting the path along the first layer, a second selection parameter indicative of selecting the path along the lightweight layer, and a third selection parameter indicating whether to skip a convolution in a corresponding layer, wherein the selecting the selected path may include: adding further a branch that skips the corresponding layer; and selecting one from among the path along the first layer, the path along the lightweight layer, and the path skip, based on the path selection parameter.

The determining of the GT lightweight parameter may include: based on a change in the target computation amount, determining a GT lightweight parameter for a different lightweighting level corresponding to the changed target computation amount, based on iterating the updating for the changed target computation amount.

According to another embodiment of the disclosure, there is provided a non-transitory computer-readable storage medium storing instructions that are executable by a processor to perform a method including obtaining a first parameter of a first machine learning model; obtaining a second parameter by transforming the first parameter based on a parameter transformation model according to a lightweighting level; generating a second machine learning model, based on the second parameter, by replacing one or more layers of the first machine learning model with a lightweight layer according to the lightweighting level; and performing an inference operation using the generated second machine learning model.

According to another embodiment of the disclosure, there is provided an electronic device including: a processor; and a memory storing instructions, wherein, when executed by the processor, the instructions cause the electronic device to: obtain a first parameter of a first machine learning model; obtain a second parameter by transforming the first parameter based on a parameter transformation model according to a lightweighting level; generate a second machine learning model, based on the second parameter, by replacing one or more layers of the first machine learning model with a lightweight layer according to the lightweighting level; and perform an inference operation using the generated second machine learning model.

Additional aspects, advantages, and features of example embodiments are defined by the following set of clauses:

    1. A processor-implemented method, comprising:

        obtaining a first parameter of a first machine learning model;
        obtaining a second parameter by transforming the first parameter based on a parameter transformation model according to a lightweighting level;
        generating a second machine learning model, based on the second parameter, by replacing one or more layers of the first machine learning model with a lightweight layer according to the lightweighting level; and
        performing an inference operation using the generated second machine learning model.

    2. The method of clause 1, wherein the first machine learning model comprises:

a first convolutional layer,
wherein the second machine learning model comprises:
a second convolutional layer that is lighter than the first convolutional layer.

3. The method of clause 2, wherein the second convolutional layer has a smaller number of kernel weights than the first convolutional layer.

4. The method of clause 2, wherein the first convolutional layer is a standard convolutional layer, and the second convolutional layer is a depthwise separable (DS) convolutional layer.

5. The method of clause 1, wherein the obtaining of the first parameter comprises:

identifying the first machine learning model as a model required by an application;
selecting a standard convolutional layer from a plurality of layers of the first machine learning model; and
determining the first parameter of the selected standard convolutional layer.

6. The method of clause 1, further comprising:
determining the lightweighting level based on an available resource of an electronic device that is to perform the inference operation.

7. The method of clause 1, comprising:

identifying the first machine learning model as a model required by an application; and
determining the lightweighting level based on a memory usage required for implementing the first machine learning model and an available memory of an electronic device at a time point of execution of the application.

8. The method of clause 1, further comprising:
obtaining, from the lightweighting level and a plurality of first layers of the first machine learning model, information indicative of a layer to be lightened among the plurality of first layers and the second parameter to be applied to the layer to be lightened, based on the parameter transformation model.

9. The method of clause 1, wherein the first parameter is selected based on an input indicative of a layer to be lightened among a plurality of first layers of the first machine learning model.

10. The method of clause 1, wherein the generating the second machine learning model comprises:
setting the second parameter in the lightweight layer, which replaces a first layer of the first machine learning model.

11. The method of clause 1, wherein the parameter transformation model comprises at least one of:

a neural network of a multi-layer perceptron (MLP) structure configured to output the second parameter from the first parameter;
a neural network comprising an encoder portion configured to output feature data from the first parameter and a decoder portion configured to output the second parameter from the feature data; or
a recurrent neural network (RNN) configured to output the second parameter for a corresponding first layer based on sequentially receiving first parameters of a plurality of first layers together with information of a previous layer of each first layer.

12. The method of clause 1, wherein the second parameter is determined by providing, to the parameter transformation model, first parameters of a plurality of convolutional layers selected from the first machine learning model, in a unit of a single layer or a plurality of layers.

13. The method of clause 1, wherein the performing of the inference operation comprises:
generating a high-resolution output image from a low-resolution input image using the second machine learning model.

14. A processor-implemented method, comprising:

at each iteration of training, selecting, based on a path selection parameter, a first path along a first layer of a first machine learning model and a second path along a lightweight layer added to the first layer as a selected path;
updating a parameter of a layer comprised in the selected path and the path selection parameter, using a first objective value calculated based on a temporary output obtained by propagating a training input along the selected path and on a ground truth (GT) and a second objective value calculated based on a temporary computation amount and a target computation amount according to the selected path;
determining a lightweight parameter converged by the updating of the lightweight layer in the target computation amount as a GT lightweight parameter according to a lightweighting level corresponding to the target computation amount with respect to a first parameter of the first machine learning model; and

training a parameter transformation model to output the GT lightweight parameter determined for the lightweighting level from the first parameter.

15. The method of clause 14, wherein the selecting of the selected path comprises:

selecting a path along one of a first branch and a lightweight branch based on a result of a binarization performed on the path selection parameter, and
wherein the method further comprises:
determining the lightweighting level based on the result of the binarization performed on the path selection parameter.

16. The method of clause 15, wherein the selecting of the path comprises:

performing the binarization in which a parameter having a great value among path selection parameters respectively corresponding to a plurality of branches is determined to be 1 and a remaining parameter is determined to be 0; and
selecting a path corresponding to the parameter having a value of 1.

17. The method of clause 14, wherein the path selection parameter comprises:

a first selection parameter indicative of selecting the path along the first layer, a second selection parameter indicative of selecting the path along the lightweight layer, and a third selection parameter indicating whether to skip a convolution in a corresponding layer,
wherein the selecting the selected path comprises:

adding further a branch that skips the corresponding layer; and
selecting one from among the path along the first layer, the path along the lightweight layer, and the path skip, based on the path selection parameter.

18. The method of clause 14, wherein the determining of the GT lightweight parameter comprises:
based on a change in the target computation amount, determining a GT lightweight parameter for a different lightweighting level corresponding to the changed target computation amount, based on iterating the updating for the changed target computation amount.
19. A non-transitory computer-readable storage medium storing instructions that are executable by a processor to perform the method of clause 1.
20. An electronic device comprising:

a processor; and
a memory storing instructions,
wherein, when executed by the processor, the instructions cause the electronic device to:

obtain a first parameter of a first machine learning model;
obtain a second parameter by transforming the first parameter based on a parameter transformation model according to a lightweighting level;
generate a second machine learning model, based on the second parameter, by replacing one or more layers of the first machine learning model with a lightweight layer according to the lightweighting level; and
perform an inference operation using the generated second machine learning model.

## BRIEF DESCRIPTION OF THE DRAWINGS

The above and/or other aspects will be more apparent by describing certain example embodiments, taken in conjunction with the accompanying drawings, in which:

FIG. 1 is a diagram illustrating a configuration of an electronic device according to an example embodiment;
FIG. 2 is a flowchart illustrating a parameter transformation method according to an example embodiment;
FIG. 3 is a diagram illustrating an example transformation of a machine learning model using a parameter transformation model illustrated in FIG. 2;
FIG. 4 is a diagram illustrating an example lightweighting of a convolutional layer according to an example embodiment;

FIGS. 5 and 6 are diagrams illustrating example structures of a parameter transformation model according to an example embodiment;

FIG. 7 is a diagram illustrating an example of generating a lightweight model including a lightweight layer for a specified layer according to an example embodiment;

FIG. 8 is a flowchart illustrating a training method for a machine learning model and a parameter transformation model according to an example embodiment;

FIG. 9 is a diagram illustrating an example of training a machine learning model and a parameter transformation model according to the training method described with reference to FIG. 8;

FIG. 10 is a diagram illustrating an additional example of training a machine learning model according to an example embodiment;

FIG. 11 is a diagram illustrating an example of training a machine learning model for super resolution (SR) according to an example embodiment; and

FIG. 12 is a diagram illustrating an example configuration of a computing device according to an example embodiment.

## DETAILED DESCRIPTION

Example embodiments are described in greater detail below with reference to the accompanying drawings.

In the following description, like reference numerals are used for like elements, even in different drawings. The matters defined in the description, such as detailed construction and elements, are provided to assist in a comprehensive understanding of the example embodiments. However, it is apparent that the example embodiments can be practiced without those specifically defined matters. Also, well-known functions or constructions are not described in detail since they would obscure the description with unnecessary detail.

Although terms of "first" or "second" are used to explain various components, the components are not limited to the terms. These terms should be used only to distinguish one component from another component. For example, a "first" component may be referred to as a "second" component, or similarly, and the "second" component may be referred to as the "first" component within the scope of the right according to the concept of the present disclosure.

It will be understood that when a component is referred to as being "connected to" another component, the component can be directly connected or coupled to the other component or intervening components may be present.

As used herein, the singular forms are intended to include the plural forms as well, unless the context clearly indicates otherwise. It should be further understood that the terms "comprises," "comprising," "includes," and/or "including," when used in this specification, specify the presence of stated features, integers, steps, operations, elements, components or a combination thereof, but do not preclude the presence or addition of one or more other features, integers, steps, operations, elements, components, and/or groups thereof.

Expressions such as "at least one of," when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c.

Unless otherwise defined herein, all terms used herein including technical or scientific terms have the same meanings as those generally understood by one of ordinary skill in the art. Terms defined in dictionaries generally used should be construed to have meanings matching with contextual meanings in the related art and are not to be construed as an ideal or excessively formal meaning unless otherwise defined herein.

Hereinafter, example embodiments will be described in detail with reference to the accompanying drawings, and like reference numerals in the drawings refer to like elements throughout. Also, in the description of example embodiments, detailed description of structures or functions that are thereby known after an understanding of the disclosure of the present application will be omitted when it is deemed that such description will cause ambiguous interpretation of the example embodiments.

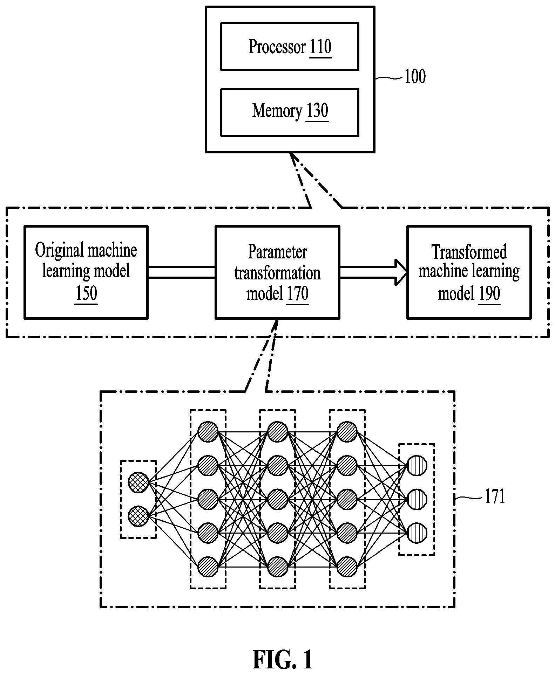

FIG. 1 is a diagram illustrating a configuration of an electronic device according to an example embodiment.

According to an example embodiment, an electronic device 100 may perform a transformation operation on a machine learning model. The electronic device 100 may include a processor 110 and a memory 130. However, the disclosure is not limited thereto, and as such, the electronic device 100 may include one or more other components.

The memory 130 may store at least one of a machine learning model, data required to implement the machine learning model, data required to execute the machine learning model, or a result of executing the machine learning model. The data required to implement the machine learning model may include, but is not limited to, parameters. The data required to execute the machine learning model may include, but is not limited to, propagated data. The result of executing the machine learning model may include, but is not limited to, a super-resolution image. The memory 130 may also store instructions. When executed by the processor 110, the instructions may cause the electronic device 100 (e.g., the processor 110) to perform one or more operations for transforming the machine learning model.

The machine learning model may refer to a model trained with a structure designed for a target task. The target task may include, for example, image recognition, image classification, text recognition, text classification, image restoration, and super-resolution image generation. However, examples of the target task are not limited thereto, and the structure of the machine learning model may be designed for various other tasks. In the following description, the super-resolution image generation is provided as the target task. However, the disclosure is not limited thereto, and as such, other target tasks may be applicable to the following description. The super-resolution image generation may refer to a task of generating an image with a higher resolution than a resolution of an input image.

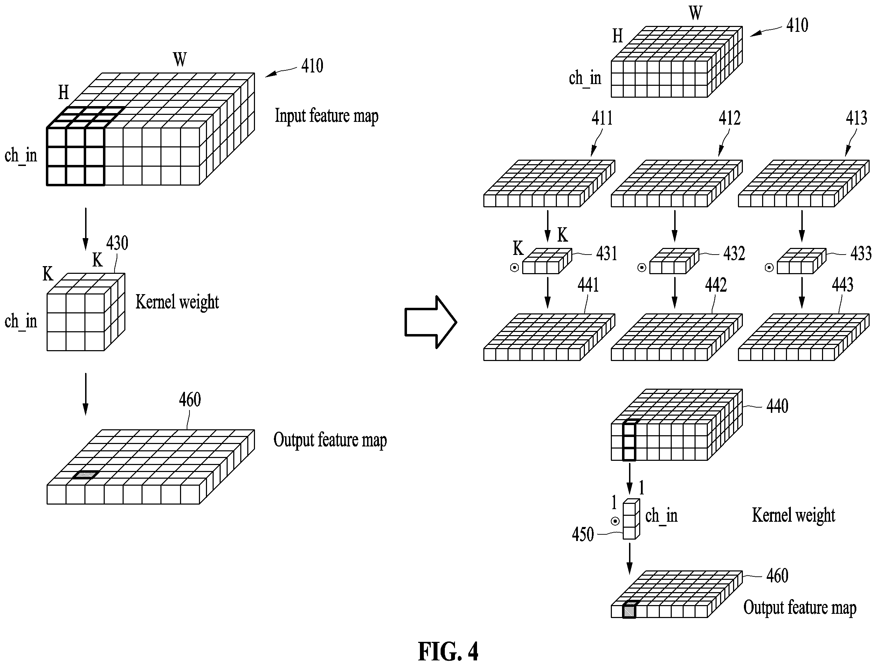

The machine learning model may include, for example, a neural network model. The neural network model may map input data and output data that are in a non-linear relationship to each other based on deep learning to perform a corresponding task, such as, object classification, object recognition, speech recognition, image recognition, and super-resolution image generation, etc. Deep learning is a machine learning technique for performing tasks such as image or speech recognition from big data sets. For example, deep learning may map input data and output data to each other through supervised or unsupervised learning. The neural network model may be, for example, a deep neural network (DNN) including a plurality of layers. The DNN may include, for example, a deep feedforward network (DFN), a recurrent neural network (RNN), a long short-term memory (LSTM), an autoencoder, a convolutional neural network (CNN), a deep residual network (DRN), a generative adversarial network (GAN), or a combination of two or more of the foregoing. However, the structure of the neural network model is not limited to the foregoing examples but may be defined and/or classified in various ways based on the structure of layers, the structure of nodes, the connections between the layers, and the connections between the nodes. The structure of the layers and the connections between layers may include, for example, a feedforward structure and connection, a recurrent structure and connection, a convolutional structure and connection, and an attentional structure and connection. According to an embodiment, layers even for the same operation (e.g., a convolution operation) may have different structures depending on how they implement the operation. For example, the structure of convolutional layers included in the neural network model may vary depending on a kernel structure for a convolution operation. A kernel structure for a standard convolution operation and a kernel structure for a depthwise separable (DS) convolution operation will be described below with reference to FIG. 4.

Parameters of the neural network model may be defined according to a corresponding neural network structure. For example, parameters of a convolutional layer in the neural network model may include a kernel weight and a bias weight. As will be described below, a kernel weight and a bias weight in a standard convolutional layer may be different from those in a DS convolutional layer.

The structure of the neural network model may include, for example, connections for propagating data between nodes. In the neural network structure, data may be propagated along connections between layers and/or nodes. For example, data may be propagated forward (which may be referred to as forward propagation) between layers and/or nodes or backward propagated (which may be referred to as backpropagation) between the layers and/or the nodes. In a layer included in a neural network, computations or operations may be performed along connections between nodes in a corresponding layer and nodes in adjacent layers. For example, in a multi-layer perceptron (MLP) model (e.g., an MLP model 171), nodes in any layer may be connected to nodes in an adjacent layer (e.g., a next layer) via connection edges having connection weights. Parameters of the MLP model may include a connection weight that is set for a connection edge between nodes. In a convolutional layer, nodes in any layer may be connected to nodes in a next layer through a kernel (or kernel filter). In a CNN model, a result based on a weighted sum between values of nodes corresponding to a kernel among nodes in a convolutional layer and corresponding kernel weights in the kernel may be propagated to a next layer. For example, the values of the nodes of the convolutional layer may be pixel values of an image input to that layer or element values of a feature map. The feature map, which is a result of applying one or more convolution operations to data (e.g., an image), may include feature values in which the data is abstracted. Among various examples of the machine learning model, the machine learning model of the neural network structure is mainly described herein as an example, but the machine learning model is not limited thereto. Thus, the methods described herein according to example embodiments may also be applied to the machine learning model of other example structures.

According to an example embodiment, the processor 110 may perform a transformation operation that transforms the machine learning model. For example, the transformation operation of the machine learning model may be to build and/or generate a transformed machine learning model 190 from an original machine learning model 150. In this case, an operation of transforming the original machine learning model 150 into a lightweight model and/or an operation of generating a lightweight model having a lightweight structure from the original machine learning model 150 may be referred to herein as a "lightweighting" operation. For example, in the transformation operation of the machine learning model, a portion of the original machine learning model 150 may be transformed into (e.g., changed to and/or replaced with) a different structure. For example, in the transformation operation of the machine learning model, a partial structure of the original machine learning model 150 may be changed to a different structure and/or replaced with a different structure. According to some example embodiments, a lightweight model may be generated by building a model of a lightweight structure that is lighter than the original machine learning model 150 and setting and/or applying a lightweight parameter to the built as model. The original machine learning model 150 may be divided into layers by unit (which may be referred to as layer units). The processor 110 may transform one or more of a plurality of layers included in the original machine learning model 150 into a layer of a different structure. For example, the processor 110 may transform at least some of the plurality of layers included in the original machine learning model 150 into a layer of a different structure. According to an embodiment, the transformation operation of the machine learning model described herein according to an example embodiment may also be applied even to a machine learning model of a complex structure requiring transformation (e.g., lightweighting).

According to an embodiment, a structure (e.g., an original structure) to be transformed (e.g., lightened) and a transformed structure corresponding to the original structure may be determined in advance. For example, in a case where the machine learning model is a neural network, connections between nodes in the original structure and connections between nodes in the transformed structure may be different. For example, a layer (e.g., a transformed layer) of the transformed structure may be a layer in which the same or similar operations as a layer (e.g., an original layer) of the original structure are implemented in a different structure. For example, the transformed layer and the original layer may have a different connection structure between nodes. In a case in which the transformed structure corresponding to the original structure is determined in advance as described above, once only a parameter (e.g., a transformed parameter) for the transformed structure is determined, the processor 110 may generate a transformed machine learning model (e.g., the transformed machine learning model 190). According to an embodiment, the original layer is a layer (e.g., a standard convolutional layer) for a standard convolution operation and the transformed layer is a layer (e.g., a DS convolutional layer) for a DS convolution operation.

The transformation operation of the machine learning model may include determining a parameter (e.g., a transformed parameter) to be applied to a transformed layer from a parameter (e.g., an original parameter) of an original layer, and generating a transformed machine learning model (e.g., the transformed machine learning model 190) by setting the transformed parameter in a layer (e.g., the transformed layer) of a predetermined structure.

For example, the processor 110 may obtain original parameters of the original machine learning model 150. The original machine learning model 150 may be a machine learning model (e.g., a neural network model) to be implemented for a target task in the electronic device 100. The processor 110 may extract an original parameter of a portion of the original machine learning model 150 is to be transformed. The original machine learning model 150 may be divided into a plurality of layers as described above, and the processor 110 may thus select layers to be transformed from the plurality of layers. In this case, the number of layers to be input into a parameter transformation model 170 described below may be limited. The processor 110 may select, from among the selected layers, an original layer to be input into the parameter transformation model 170. The processor 110 may extract an original parameter of the selected original layer. The original parameter may be a parameter set in the original layer. The original layer may refer to a layer of a structure that is not lightened, for example, a standard convolutional structure, in the original machine learning model 150. For example, the original machine learning model 150 may be a neural network including one or more convolutional layers. A convolutional layer may refer to a layer that propagates, to a next layer, a result of a convolution between data input to the corresponding layer and a kernel, as described above. In an example case in which the original machine learning model 150 includes layers having a structure different from that of the one or more convolutional layers, the processor 110 may obtain parameters of the one or more convolutional layers. A standard convolutional layer of the original machine learning model 150 may also be referred to as an original convolutional layer. For example, the original parameters may include a kernel weight and a bias value for a standard convolution.

The processor 110 may determine transformed parameters from the original parameters according to a lightweighting level, based on the parameter transformation model 170. The parameter transformation model 170 may be a machine learning model designed and trained to output the transformed parameters from the original parameters according to the lightweighting level. The processor 110 may output a transformed parameter by inputting, to the parameter transformation model 170, the original parameter of the portion (e.g., the original layer) of the original machine learning model 150 to be transformed along with the lightweighting level. The original parameters may be at least some parameters of the original machine learning model 150. The lightweighting level may indicate the extent to which the portion of the original machine learning model 150 provided to the parameter transformation model 170 is lightened. For example, the lightweighting level may indicate the number of layers to be lightened among a plurality of layers (e.g., original layers) provided to the parameter transformation model 170. In an example case in which original parameters corresponding to "n" original layers are input to the parameter transformation model 170, a lightweighting level "i" may have an integer value that is greater than or equal to zero (0) and less than or equal to n. However, this is provided only as an example, and the lightweighting level is not limited thereto. For example, n may be any integer greater than or equal to 1.

For example, the parameter transformation model 170 may be an MLP model 171. The MLP model 171 shown in FIG. 1 may include an input layer, a hidden layer, and an output layer. The input layer, the hidden layer, and the output layer may each include a plurality of artificial nodes. Although the hidden layer is illustrated in FIG. 1 as including three layers for ease of description, the hidden layer may include any number of layers. In addition, although the neural network (e.g., the MLP model 171) is illustrated in FIG. 1 as including a separate input layer for receiving input data, the input data may be input directly to the hidden layer. In the neural network, artificial nodes in layers, excluding the output layer, may be connected to artificial nodes in their next layers through links for transmitting an output signal. The number of such links may correspond to the number of artificial nodes in a next layer. To each artificial node included in the hidden layer, an output of an activation function for weighted inputs of artificial nodes included in a previous layer may be input. The weighted inputs may be ones obtained by multiplying inputs of the artificial nodes in the previous layer by weights. The weights may be referred to as parameters of the neural network. The activation function may include sigmoid, hyperbolic tangent (tanh), and rectified linear unit (ReLU), and nonlinearity may be formed in the neural network by the activation function. To each artificial node included in the output layer, the weighted inputs of the artificial nodes in the previous layer may be input.

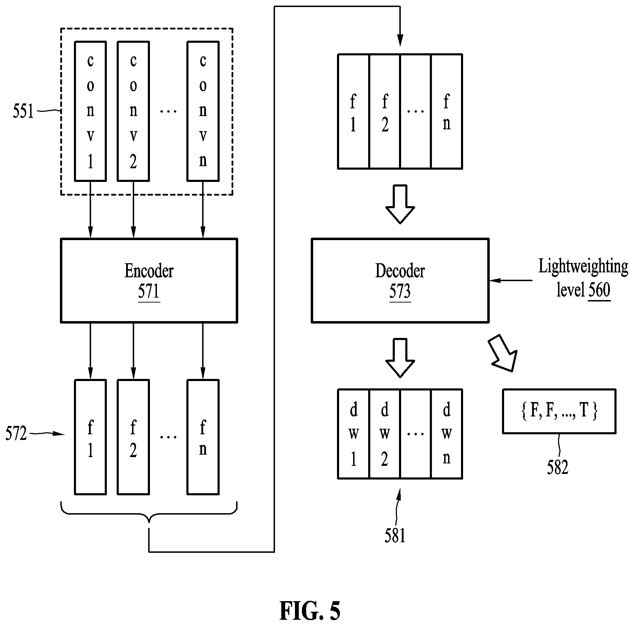

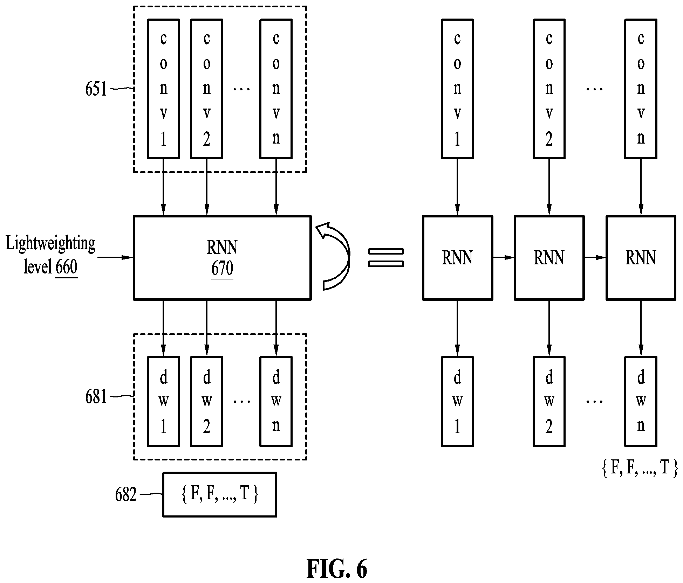

Although the MLP model 171 is described above as an example of the parameter transformation model 170, the parameter transformation model 170 is not limited to the MLP model 171, and as such, according to another embodiment, the parameter transformation model 170 may include other neural networks. For example, FIGS. 5 and 6 illustrate other example structures of the parameter transformation model 170.

The processor 110 may generate the transformed machine learning model 190 (e.g., a lightweight model) using the transformed parameters. The lightweight model may be a model that is based on at least some layers of the original machine learning model 150 being replaced with a lightweight layer according to the lightweighting level. The transformed machine learning model 190, which is a model for the same target task as the original machine learning model 150, may be a model that is at least partially different from the original machine learning model 150. For example, parameters of the transformed machine learning model 190 (e.g., the parameters of the neural network) may be different from those of the original machine learning model 150, or the structure (e.g., the structure of the neural network) and the parameters of the transformed machine learning model 190 may be different from those of the original machine learning model 150. At least one of a computation amount or a parameter size that is required for the target task in the transformed machine learning model 190 may be reduced from corresponding values required in the original machine learning model 150. The parameter size, which is the size of the memory 130 in which the parameters of the machine learning model are stored, may increase depending on the number of parameters, for example. In this case, the transformed machine learning model 190 with the reduced computation amount or parameter size may also be referred to as a lightweight model.

For example, the processor 110 may replace or change the number of layers corresponding to the lightweighting level among the original layers of the original machine learning model 150 with lightweight layers. The processor 110 may build a lightweight model including the replaced or changed lightweight layers. The processor 110 may set the transformed parameters described above for the lightweight layers. The remaining layers in the lightweight model, excluding the replaced lightweight layers, may have the same structure and parameters as corresponding layers in the original machine learning model 150. For example, in a case where an original layer is a standard convolutional layer, a transformed layer (e.g., a lightweight layer) may be a transformed convolutional layer (e.g., a DS convolutional layer). The transformed machine learning model 190 may be a neural network including one or more transformed convolutional layers. The transformed convolutional layer may also be referred to as a lightweight convolutional layer. According to an embodiment, the transformed convolutional layer of the transformed machine learning model 190 is the DS convolutional layer. A transformed parameter may be parameters set in the transformed layer (e.g., a lightweight layer structure). For example, in a case where the transformed layer is the DS convolutional layer, the transformed parameter may include a kernel weight (e.g., a DS kernel weight) and a bias value for a DS convolution. In the DS convolution, an operation using a kernel may be performed in two steps, and the size of a DS kernel (e.g., the number of kernel weights) may be smaller than the size of a standard kernel. The DS convolution operation will be described in detail below with reference to FIG. 4.

The number of parameters in a lightweight (or lightweighted) machine learning model (e.g., the lightweight model) may be smaller than the number of parameters in the original machine learning model 150. The lightweight model may exhibit the same or similar performance as that of the original machine learning model 150, even with a reduced computation amount compared to a computation amount of the original machine learning model 150. Although examples using giga operations per second (GOPS) as a unit of a computation amount is described herewith, the examples of the unit of a computation amount are not limited thereto, and as such, other units of a computation amount may be used according to another embodiment.

The processor 110 may perform an inference operation using the generated lightweight model. As described above, a target task of the lightweight model and a target task of the original machine learning model 150 may be the same. As data is input into the lightweight model, the processor 110 may generate an output based on the target task. For example, in a case where the target task is to generate a super-resolution image, the lightweight model may be a neural network model of a structure that outputs an image of a second resolution (e.g., a super-resolution image) from an image of a first resolution. In this case, the second resolution may be higher than the first resolution. In an example case in which an input image of the first resolution is provided to the lightweight model, the processor 110 may obtain an output image of the second resolution from the lightweight model. The processor 110 may display the generated output image of the second resolution through a display.

According to an example embodiment, using the lightweight model, the electronic device 100 may quickly and accurately generate a realistic rendered image with a relatively small computation amount. The electronic device 100 may also be implemented as a mobile device with limited computing power. The electronic device 100 may lighten various neural network models including convolutional layers through the operations and methods described above for lightweighting. Using the lightweight model, the electronic device 100 may provide computer graphics applications or computer vision applications that use images as inputs. For example, using the lightweight model, the electronic device 100 may render, in real time, games in which light is realistically tracked, augmented reality (AR) images, and virtual reality (VR) images even in a mobile environment.

According to an example embodiment, the electronic device 100 may also output information (e.g., lightweight layer information) indicating which of a plurality of layers of the neural network model are suitable for the transformation described above. For example, the electronic device 100 may set or determine a layer to be lightened from among a plurality of original layers of a target neural network and/or determine the number of layers to be lightened. The electronic device 100 may output, along with the transformed parameters, information (e.g., the lightweight layer information) indicating which of input original layers are to be transformed using the parameter transformation model 170 according to a lightweighting level selected from among a plurality of lightweighting levels. According to an embodiment, because the parameter transformation model 170 is trained in advance with a number of lightweighting levels and parameters for each lightweighting level by training described below, the electronic device 100 may dynamically adjust a lightweighting level based on computing resources available for an execution of each application. Depending on the dynamically adjusted lightweighting level, the number of layers to be transformed (e.g., layers to be lightened) among a plurality of layers of an original machine learning model may vary. The electronic device 100 may build a lightweight model in which some layers are lightened according to the dynamically adjusted lightweighting level, and may apply, to the lightweight model, parameters transformed by the parameter transformation model 170 according to the lightweighting level. The electronic device 100 may thus generate the lightweight model corresponding to the dynamically adjusted lightweighting level. The lightweight model may be configured to be executable with the available computing resources. Therefore, the electronic device 100 may generate the lightweight model having a greater computation amount and a reduced power consumption amount while having a minimized reduction in accuracy.

The smaller the number of parameters, the smaller the size of the model and the smaller the computation amount. Using the model with the smaller computation amount, less power and performance time may be consumed in training and inference processes. Therefore, the lightweight model described above may be used effectively on mobile devices that have limited computational power of hardware (e.g., a graphics processing unit (GPU) and a neural processing unit (NPU)) and are vulnerable to power consumption.

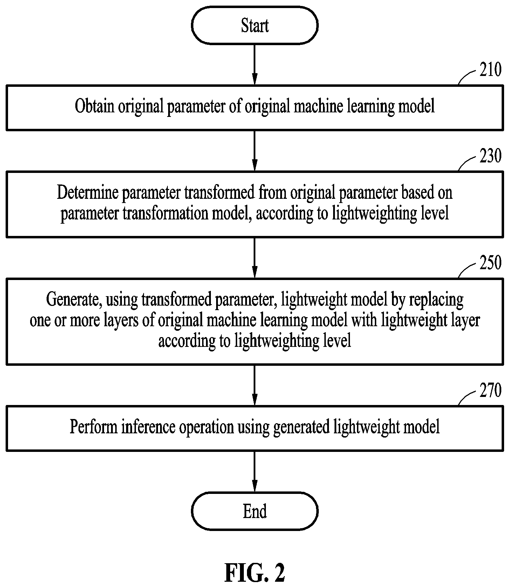

FIG. 2 is a flowchart illustrating a parameter transformation method according to an example embodiment.

In operation 210, the method may include obtaining original parameters of an original machine learning model. For example, an electronic device (e.g., the electronic device 100 in FIG. 1) according to an example embodiment may obtain original parameters of an original machine learning model. For example, the electronic device may extract a parameter of a layer to be transformed among a plurality of layers included in the original machine learning model. As described above, the electronic device may extract an original parameter of a standard convolutional layer. The electronic device may obtain original parameters corresponding to the number of layers corresponding to an input to a parameter transformation model.

In operation 230, the method may include determining transformed parameters from the obtained original parameters based on the parameter transformation model. For example, the electronic device may determine transformed parameters from the obtained original parameters based on the parameter transformation model according to a lightweighting level. The lightweighting level may correspond to the number of layers to be transformed (or lightened) among original layers input to the parameter transformation model. By providing the original parameters and the lightweighting level to the parameter transformation model, the electronic device may generate the lightweight transformed parameters and lightweight layer information from the original parameters. The lightweight layer information may indicate which of the original layers input to the parameter transformation model are to be transformed.

In operation 250, the method may include generating a lightweight model based on the transformed parameters and the original machine learning model. For example, the electronic device may generate a lightweight model using the transformed parameters. For example, the electronic device may generate a lightweight model by replacing one or more layers of the original machine learning model with a lightweight layer according to the lightweighting level. For example, the electronic device may build a machine learning model (e.g., the lightweight model) that includes lightweight layers in a portion indicated by the lightweight layer information obtained in operation 230 and original layers in other portions (e.g., remaining portions). The electronic device may generate the lightweight model by setting the transformed parameters for the lightweight layers in the lightweight model.

In operation 270, the method may include performing an inference operation using the generated lightweight model. For example, the electronic device may perform an inference operation using the generated lightweight model. The electronic device may generate output data by providing input data to the lightweight model. For example, the input data may be a low-resolution image and the output data may be a high-resolution image (e.g., a super-resolution image). However, the input data and the output data of the lightweight model are not limited thereto, and the type and format of the input data and the output data may vary depending on a target task.

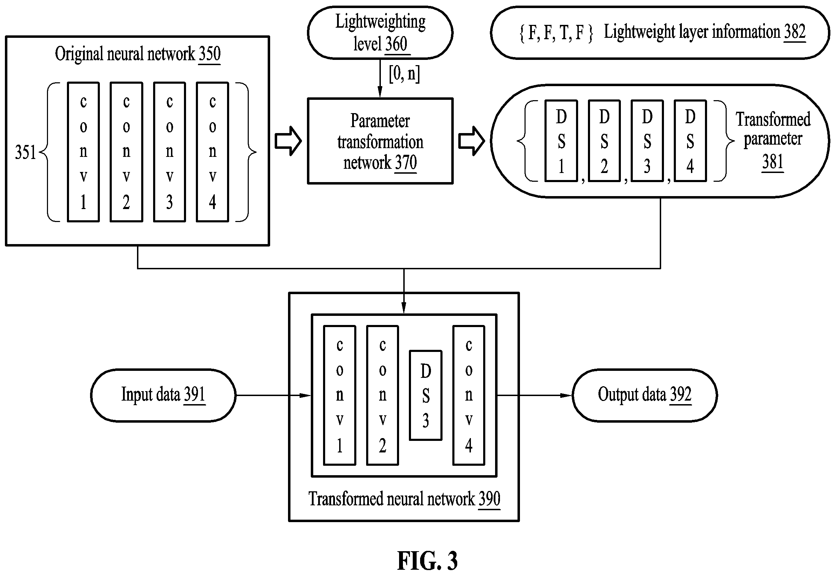

Hereinafter, an example of transforming a machine learning model will be described in greater detail below with reference to FIG. 3.

FIG. 3 is a diagram illustrating an example transformation of a machine learning model using the parameter transformation model illustrated in FIG. 2.

An electronic device (e.g., the electronic device 100 in FIG. 1) according to an example embodiment may, at an execution of an application, identify an original machine learning model to be used in the application. For example, the electronic device may identify at least one of the structure, layers, or parameters of the original machine learning model by analyzing the original machine learning model or using information obtained by previously analyzing the original machine learning model. The electronic device may select a standard convolutional layer from among a plurality of layers of the identified machine learning model. The electronic device may determine an original parameter of the selected standard convolutional layer.

For example, the electronic device may determine standard convolutional layers 351 in an original neural network 350. As shown in FIG. 3, for example, of the standard convolutional layers 351, there are a first convolutional layer with an original parameter conv1, a second convolutional layer with an original parameter conv2, a third convolutional layer with an original parameter conv3, and a fourth convolutional layer with an original parameter conv4. However, the disclosure is not limited thereto, and as such, the number of convolutional layers may be different than four. The original parameters (e.g., conv1, conv2, conv3, and conv4) may each include a kernel weight and a bias weight for a corresponding standard convolution operation. For example, the original parameter conv1 of the first convolutional layer may include a kernel weight and a bias weight for an operation of the first convolutional layer.

The electronic device may also determine a lightweighting level 360 based on available resources of the electronic device for performing an inference operation. However, the disclosure is not limited thereto, and as such, the electronic device may also determine a lightweighting level 360 based on one or more other criteria. The available resources of the electronic device may include an available memory size, a central processing unit (CPU) idle rate, and a battery residual value. In response to a decrease in at least one of the available memory size, the CPU idle rate, or the battery residual value, the lightweighting level 360 may increase. Conversely, in response to an increase in at least one of the available memory size, the CPU idle rate, or the battery residual value, the lightweighting level 360 may decrease.

For example, when executing an application, the electronic device may identify an original machine learning model required by the application. The electronic device may determine the lightweighting level 360 based on a memory usage required to implement the original machine learning model and an available memory of the electronic device at a time point at which the application is executed. The lightweighting level 360 may indicate the number of layers to be lightened among a plurality of original layers. In an example case in which there are "n" original layers, the lightweighting level 360 may be an integer that is greater than or equal to 0 and less than or equal to n. In this example, n may be an integer greater than or equal to 1.

The electronic device may predict a memory resource usage for each lightweighting level 360 (e.g., the number of layers to be lightened) and select the lightweighting level 360 having the predicted resource usage that is less than or equal to the available resources. The electronic device may determine the lightweighting level 360 that is increased as the available resources decrease. The electronic device may determine the lightweighting level 360 that is decreased as the available resources increase. For example, the electronic device may determine the lightweighting level 360 (e.g., the number of layers to be lightened) in which the memory usage required to implement the machine learning model is less than or equal to the available memory.

The determination of the lightweighting level 360 is not limited to the foregoing. For example, the electronic device may predict a CPU usage for each lightweighting level, and determine the lightweighting level 360 by comparing the predicted CPU usage and the CPU idle rate. The electronic device may also predict a battery usage for each lightweighting level, and determine the lightweighting level 360 by comparing the predicted battery usage and the battery residual value. In a case where the electronic device is a mobile device, determining the lightweighting level 360 based on the battery residual value may allow the mobile device to maintain as long an uptime (or operating time) as possible. According to an embodiment, the electronic device may determine the lightweighting level 360 based on an external input or information related to an external device.

The electronic device may predict a resource usage (e.g., a memory usage) of a lightweight model, for each combination of generating the lightweight model according to the number of layers to be lightened among a given plurality of original layers. The electronic device may calculate the memory usage of the lightweight model based on the number of parameters of the lightweight model to be generated and the size of data (e.g., feature map) propagated depending on a layer structure. The number of parameters of the lightweight model may be a sum of the number of original parameters of original layers included in the lightweight model and the number of lightweight parameters of lightweight layers in the lightweight model. The parameter size of the lightweight model may be the memory size required to use the original parameters of the original layers included in the lightweight model and the lightweight parameters of the lightweight layers in the lightweight model.

According to an embodiment, the electronic device may determine lightweight layer information 382 and transformed parameters 381, based on the lightweighting level 360, the plurality of original layers of the original machine learning model, and a parameter transformation model (e.g., a parameter transformation network 370). For example, the lightweight layer information 382 may include information indicating which of the plurality of original layers is to be lightened and the transformed parameters 381 may include parameters to be applied to the layers to be lightened. As described above, an original layer may be a standard convolutional layer, and an original parameter may include a kernel weight (e.g., a kernel element) included in a kernel (e.g., kernel filter) of the standard convolutional layer and a bias weight. A lightweight layer may be a DS convolutional layer, and a transformed parameter may include a kernel weight of kernels of the DS convolutional layer and a bias weight. The kernels of the DS convolutional layer may include kernels for depthwise convolutions corresponding to the number of channels, and a kernel for a pointwise convolution. A standard convolution operation and a DS convolution operation will be described in detail below with reference to FIG. 4.

The lightweight layer information, which is the information indicating which layer of the plurality of original layers is to be lightened, may be represented as, for example, a set of Boolean flags {T/F, ..., T/F} indicating whether each layer is to be transformed. In an example case in which each Boolean flag is T (True), it may indicate that a corresponding layer is to be transformed, and in an example case in which it is F (False), it may indicate that a corresponding layer is maintained as an original layer.

In an example case in which there are "n" original layers, there may also be "n" Boolean flags, and an ith Boolean flag of the n Boolean flags may indicate whether to transform an ith original layer of the n original layers. For example, the electronic device may use the parameter transformation network 370 to generate transformed parameters DS1, DS2, DS3, and DS4 of "n" DS convolutional layers from original parameters conv1, conv2, conv3, and conv4 of "n" standard convolutional layers. According to an embodiment, a transformed parameter (e.g., the first transformed parameter DS1) of a DS convolutional layer may include kernel weights and a bias weight of the DS convolutional layer. FIG. 3 illustrates an example where n is 4 (i.e., n = 4) and a lightweighting level is 1. In this example, the electronic device may output {F, F, T, F} as lightweight layer information, along with the transformed parameters DS1, DS2, DS3, and DS4 from the parameter transformation network 370. In this case, {F, F, T, F} may indicate using only the transformed parameter DS3 of a third layer out of the parameters conv1, conv2, conv3, and conv4 for the four original layers.

The electronic device may build a structure of a lightweight model (e.g., a transformed neural network 390) based on the lightweight layer information. For example, the electronic device may build the lightweight model based on a combination of an original layer and a lightweight layer indicated in the lightweight layer information. In the example illustrated in FIG. 3, the electronic device may build the transformed neural network 390 including layers arranged in the order {standard convolutional layer, standard convolutional layer, DS convolutional layer, standard convolutional layer}, according to the lightweight layer information of {F, T, F}. The transformed neural network 390 may be a neural network with the lightweighting level of 1, in which only one of the four layers is lightened. The building of the lightweight model may be performed by declaring layer structures in order. For example, the electronic device may declare layers in the order {standard convolutional layer, standard convolutional layer, DS convolutional layer, standard convolutional layer } as described above.

The electronic device may set a transformed parameter in a lightweight layer included in place of an original layer of the original machine learning model. For example, in the transformed neural network 390, the electronic device may set the original parameters for the original layers and the transformed parameters for the lightweight layers. In the example illustrated in FIG. 3, the electronic device may set the original parameter conv1 for the first convolutional layer, the original parameter conv2 for the second convolutional layer, the transformed parameter DS3 for the third convolutional layer, and the original parameter conv4 for the fourth convolutional layer, respectively, for {standard convolutional layer, standard convolutional layer, DS convolutional layer, standard convolutional layer}. For example, the DS convolutional layer may include kernels for a depthwise convolution corresponding to the number of channels and a kernel for a pointwise convolution. The electronic device may set corresponding kernel weights of the transformed parameters for the kernels for the depthwise convolution. The electronic device may set corresponding kernel weights of the transformed parameters for the kernel for the pointwise convolution. The electronic device may set a bias weight of the transformed parameters for a corresponding DS convolutional layer. Similarly, the electronic device may set corresponding weights of the transformed parameters for kernels and bias of a standard convolutional layer.

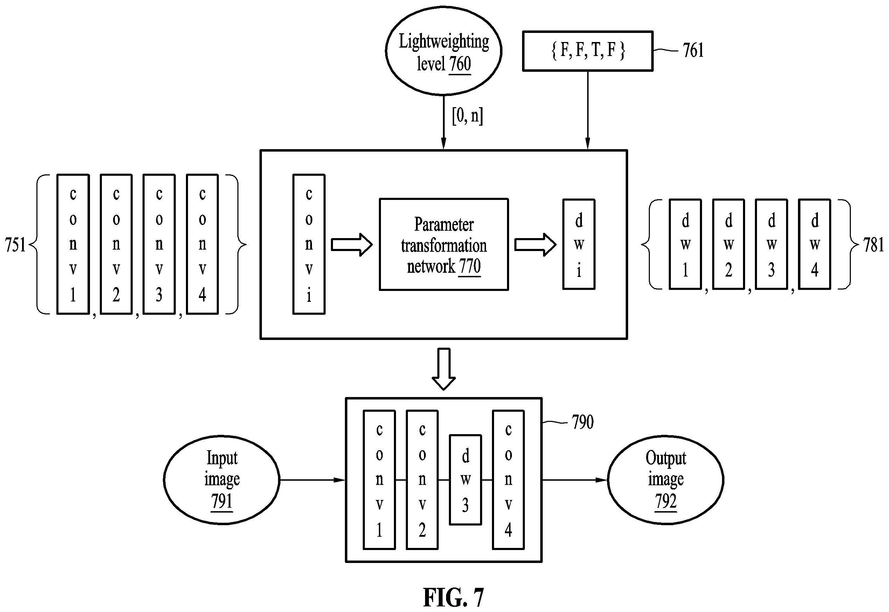

Additionally, the electronic device may provide original parameters of a plurality of convolutional layers selected from the original machine learning model to the parameter transformation model, either as a single layer or as a plurality of layers, to determine transformed parameters. FIG. 3 illustrates an example of providing original parameters conv1, conv2, conv3, and conv4 of the standard convolutional layers 351 of a unit of a plurality of layers (e.g., four layers) to the parameter transformation network 370. The electronic device may, but is not limited to, provide parameters of corresponding original layers of the original neural network 350 to the parameter transformation network 370 all at once. The electronic device may divide the corresponding original layers of the original neural network 350 into the number of layers supported by the parameter transformation network 370, and provide original parameters of the divided original layers to the parameter transformation network 370, respectively. Further, an example of providing parameters by a unit of a single layer will be described below with reference to FIG. 7.

The electronic device may generate output data 392 by performing an inference operation on input data 391 using the transformed neural network 390. For example, the electronic device may generate a high-resolution output image from a low-resolution input image using a lightweight model. A target task of the lightweight model is not limited to the foregoing example, and the lightweight model may be used for various tasks depending on its design. For another example, the electronic device may generate a denoised output image from an input image including noise using the lightweight model. In an example case in which the electronic device is mounted on and/or integrated into a vehicle, the electronic device may output object detection results from an input image obtained during driving using the lightweight model. The object detection results may include, but is not limited to results of detecting pedestrians and vehicles. In this case, the electronic device may control acceleration and/or braking of the vehicle (e.g., an autonomous vehicle) based on the object detection results. In another example case in which the electronic device is mounted on and/or integrated into a drone (e.g., a flying drone), the electronic device may perform specific object tracking and obstacle detection using output results generated from input camera sensor data using the lightweight model. The electronic device may perform altitude adjustments and/or rerouting for the drone based on the output results generated using the lightweight model.

According to an example embodiment, in a case in which a lightweighting level is dynamically input, the electronic device may immediately obtain a lightweight neural network. For example, lightweight neural network maybe the lightweight neural network 390. The electronic device may dynamically generate various lightweight models based on a value of the lightweighting level, without requiring any additional training. As described above, using the parameter transformation network 370 trained in advance, the electronic device may generate the transformed neural network 390 including standard convolutional parameters and DS convolutional parameters according to a desired lightweighting level.

Although an example where the lightweighting level 360 is determined based on resources available at the time of an execution of an application has been described above, examples are not limited thereto. In an example case of determining a shortage of resources during the execution of the application, the electronic device may dynamically build and generate a new lightweight model with a lightweighting level (e.g., the lightweighting level 360) that is higher than a lightweighting level of a lightweight model used at that point in time. In an example case in which the available resources increase during the execution of the application, the electronic device may dynamically build and generate a new lightweight model with a lightweighting level (e.g., the lightweighting level 360) that is lower than that of a lightweight model used at that point in time. In an example case in which the available resources are sufficient, the electronic device may use the original machine learning model instead of the lightweight model. According to an embodiment, the lightweight model may be provided to an external device. For example, the external device may deploy the light weight model.

FIG. 4 is a diagram illustrating an example lightweighting of a convolutional layer according to an example embodiment.

According to an example embodiment, a machine learning model (e.g., a neural network model) may be designed and trained to output results based on a target task to be solved from a given input, as described above. In an example case in which the machine learning model is implemented as a neural network, the neural network may include a plurality of layers that are layered and/or connected. The neural network model may be configured by a combination of different types of layers depending on a target task. For example, the neural network model for a target task involving two-dimensional (2D) images may include a standard convolutional layer. The standard convolutional layer may be used in various neural network models for target tasks related to computer graphics and computer vision.

For example, an original machine learning model may include original convolutional layers. The original convolutional layers may be standard convolutional layers. An operation of the standard convolutional layers may be schematized as shown on the left side of FIG. 4. The electronic device may perform a standard convolution operation based on a kernel 430 (e.g., a kernel filter) on data input to a convolutional layer. The input data may be an input feature map 410. For example, the electronic device may perform an elementwise dot product between an individual element (e.g., a kernel weight) of the kernel 430 and a value (e.g., an input feature value) corresponding to a portion of the input feature map 410 where the kernel 430 is located along a stride. The electronic device may determine, as a value (e.g., an output feature value) of output data (e.g., an output feature map 460), a sum of results of the elementwise dot product between the kernel weights and respectively corresponding feature values and a bias weight. The electronic device may calculate corresponding output feature values by striding (or sweeping) the kernel 430 (e.g., the kernel filter) with respect to the input feature map 410. For clarity, an example of a standard convolutional layer with an output channel count (i.e., the number of output channels) of 1 is illustrated in FIG. 4, but examples are not limited thereto. For example, the output channel count may be ch_out. The channel count ch_out may be an integer greater than or equal to 1. The electronic device may generate the output feature map 460 with a channel count of ch_out by repeating the standard convolution operation described above by the number corresponding to ch_out. The kernel weights and the bias weight may be different for each standard convolution operation.

In the example illustrated in FIG. 4, a height H, a width W, an input channel count ch_in, and an output channel count ch_out corresponding to information (e.g., tensor) of the input feature map 410 may each be an integer greater than or equal to 1. A channel count of the kernel 430 may be equal to the input channel ount ch_in, and a height K and a width K of the kernel 430 may each be an integer greater than or equal to 1. In a standard convolutional layer, the size (e.g., the number of kernel weights) of the kernel 430 may be K × K × ch_in × ch_out. The total number of operations in a convolutional layer using the kernel 430 (e.g., a standard kernel filter) described above may be H × W × K × K × ch_in × ch_out.

As described above, a lightweight model may include a lightweight convolutional layer that is lightened from a convolutional layer. The lightweight convolutional layer may be a layer of a structure that approximates an original convolutional layer. The lightweight convolutional layer may have a smaller number of kernel weights than the original convolutional layer. For example, the lightweight convolutional layer may be a DS convolutional layer. The DS convolutional layer may perform an operation that approximates the standard convolutional layer with a smaller computation amount.

A DS convolution operation of the DS convolutional layer may be divided into two-step convolution operations. For example, the electronic device may perform a depthwise convolution and a pointwise convolution. The electronic device may split the input feature map 410 by each input channel for the depthwise convolution operation. The electronic device may perform a stride-based convolution operation with a single kernel (e.g., a kernel filter) corresponding to each of the split input channels. For example, in the example illustrated in FIG. 4, the electronic device may split the input feature map 410 into a first input map 411, a second input map 412, and a third input map 413. The electronic device may generate a first channel map 441, a second channel map 442, and a third channel map 44, respectively, by performing a convolution operation based on a first kernel 431 on the first input map 411, a convolution operation based on a second kernel 432 on the second input map 412, and a convolution operation based on a third kernel 433 on the third input map 413. The electronic device may generate the output feature map 460 by calculating a sum of elementwise dot product results and a bias weight while striding a kernel 450 for a pointwise convolution over channel maps 440. By the pointwise convolution, the output feature map 460 corresponding to a linear combination of the channel maps 440 that is a result of the depthwise convolution may be generated.

In the above example, the first kernel 431, the second kernel 432, and the third kernel 433 may each have the size of K × K, and thus the total number of kernel weights of the kernels 431, 432, and 433 for the depthwise convolution may be K × K × ch_in. In the example illustrated in FIG. 4, ch_in may be 3. The number of kernel weights of the kernel 450 for the pointwise convolution may be 1 × 1 × ch_in × ch_out. This is because the pointwise convolution is repeated as many times as ch_out. The total number of operations in the DS convolutional layer using the kernels 431, 432, 433, and 440 described above may be H × W × K × K × ch_in + H × W × 1 × 1 × ch_in × ch_out. Therefore, the DS convolutional layer may have relatively fewer operations and a smaller number of kernel weights, compared to the standard convolutional layer.

Although example embodiments of the disclosure illustrate an example of outputting, by a parameter transformation model, transformed parameters (e.g., kernel weights and a bias weight) of DS convolutional layers from original parameters (e.g., kernel weights and a bias weight) of standard convolutional layers, the disclosure is not limited thereto. As such, according to another embodiment, the parameter transformation model may also be designed to output parameters for transforming neural network layers of other complex structures into a layer of a lightweight structure.

FIGS. 5 and 6 are diagrams illustrating example structures of a parameter transformation model according to an example embodiment.

According to an example embodiment, a parameter transformation model may include at least one of a neural network of an MLP structure configured to output transformed parameters from original parameters, a neural network including an encoder portion configured to output feature data from original parameters and a decoder portion configured to output transformed parameters from the feature data, or a recurrent neural network (RNN) configured to output a transformed parameter for a corresponding original layer by sequentially receiving original parameters of a plurality of original layers together with previous layer information of each of the original layers. The neural network of the MLP structure, for example, an MLP model, has been described above with reference to FIG. 1 and will not be repeated here.

FIG. 5 illustrates the parameter transformation model of a structure including an encoder portion 571 and a decoder portion 573. The encoder portion 571 may share the same connection weight for multiple inputs. For example, the encoder portion 571 may output a corresponding single feature from original parameters of a single standard convolutional layer. The encoder portion 571 may output feature data respectively for a plurality of standard convolutional layers 551. For example, the encoder portion 571 may output n features 572 (e.g., feature data) respectively corresponding to n standard convolutional layers 551. The decoder portion 573 may output transformed parameters 581 for n DS convolutional layers from the n features 572 (e.g., the feature data) output by the encoder portion 571. In addition, the decoder portion 573 may receive, as an input, a lightweighting level 560 along with the n features 572 described above. The decoder portion 573 may also output lightweight layer information 582.

FIG. 6 illustrates an RNN 670 as an example of the parameter transformation model. The RNN 670 may sequentially receive original parameters corresponding to a plurality of original layers 651 (e.g., standard convolutional layers) in the order of layers. For example, the RNN 670 may sequentially receive original parameters corresponding to "n" original layers 651. The RNN 670 may output a transformed parameter of a corresponding transformed layer (e.g., a DS convolutional layer) from an original parameter corresponding to any one of the n original layers 651. The RNN 670 may receive previous layer information to output a transformed parameter for any layer. For example, the RNN 670 may recurrently transfer the transformed parameter itself or an intermediate feature extracted from the original parameter for a next layer. The RNN 670 may output a transformed parameter of a corresponding layer of the n original layers 651, from an intermediate feature (e.g., previous layer information) estimated from a previous layer of the corresponding layer and from an original parameter of the corresponding layer. Thus, the RNN 670 may generate transformed parameters for n lightweight layers 681 from the previous layer information (e.g., a transformed parameter of the previous layer or an intermediate feature extracted from an original parameter of the previous layer) and the original parameter of the current layer. Further, the RNN 670 may receive the lightweighting level 660 along with the original parameter described above and may further output lightweight layer information 682.

Therefore, the parameter transformation model may be implemented in various structures as described above and may efficiently handle an input of a relatively large size, for example, original parameters including kernel weights and a bias weight. For example the parameter transformation model may be implemented in various structures as described above and may efficiently handle an input of a size larger than a reference value.

Although the parameter transformation model that outputs transformed parameters of a plurality of lightweight layers from original parameters of a plurality of original layers has been described above, examples are not limited thereto. An example of the parameter transformation model that transforms a parameter for a single layer will be described below with reference to FIG. 7.

FIG. 7 is a diagram illustrating an example of generating a lightweight model including a lightweight layer for a specified layer according to an example embodiment.

According to an example embodiment, an electronic device (e.g., the electronic device 100 in FIG. 1) may determine, based on a parameter transformation model, a transformed parameter for an original parameter selected based on an input indicating a layer to be lightened among a plurality of original layers of an original machine learning model. For example, the electronic device may provide a lightweighting level 760 and lightweight layer information 761, along with an original parameter (convi) of a single original layer, to a parameter transformation network 770. The electronic device may obtain a transformed parameter (dwi) for a single lightweight layer corresponding to the single original layer. In the example illustrated in FIG. 7, a transformed parameter 781 for a third layer may be obtained. The lightweight layer information 761 may be generated separately or may include information indicative of a layer set by a user as a layer to be lightened.

For example, the electronic device may determine whether a layer provided to the parameter transformation network 770 among the plurality of original layers 751 is indicated as a transformation target in the lightweight layer information 761. In an example case in which the layer (e.g., a layer indicated as T) input to the parameter transformation network 770 is indicated as the transformation target in the lightweight layer information 761, the electronic device may calculate a transformed parameter using the parameter transformation network 770. In an example case in which the layer (e.g., a layer indicated as F) input to the parameter transformation network 770 is not indicated as the transformation target in the lightweight layer information 761, the electronic device may skip an operation that is based on the parameter transformation network 770.

The electronic device may generate a new lightweight model 790 including a transformed parameter dw3 obtained through the operations described above. The electronic device may generate an output image 792 from an input image 791 based on the lightweight model 790.

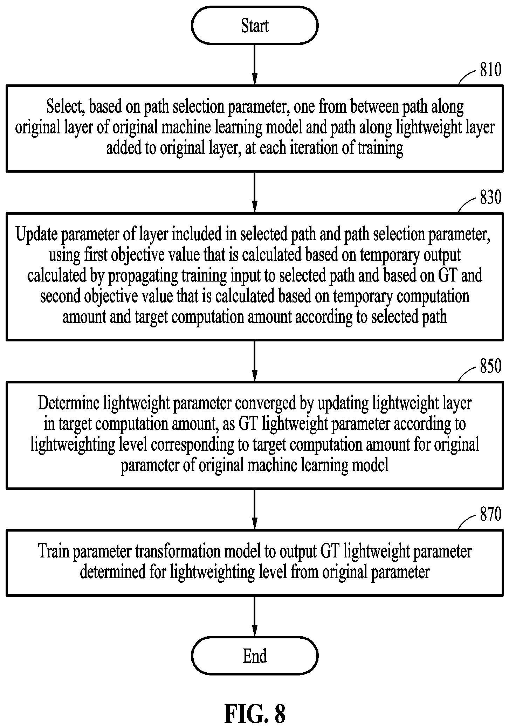

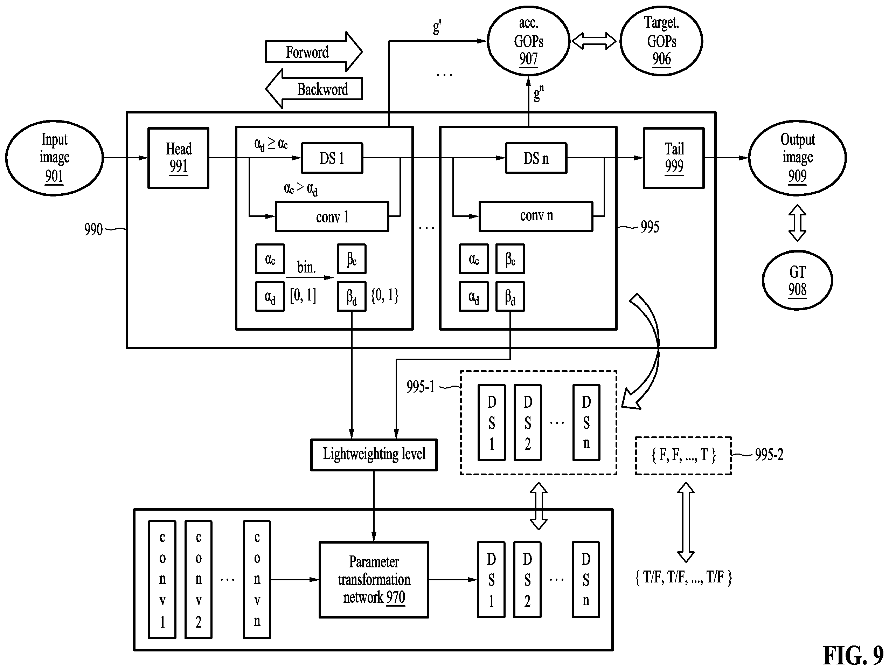

FIG. 8 is a flowchart illustrating a training method for a machine learning model and a parameter transformation model according to an example embodiment. FIG. 9 is a diagram illustrating an example of training a machine learning model and a parameter transformation model according to the training method described with reference to FIG. 8.

According to an example embodiment, a training device may train a parameter transformation model with optimal layers to be transformed through lightweighting for each lightweighting level. For example, transformed parameters may be determined through training from a limited target computation amount, and a lightweighting level may be determined based on the limited target computation amount. The training device may be a separate device from the electronic device but is not limited thereto, and it may be integrated and implemented as the same device. The training device may include a memory for storing machine learning models and data required for training, and a processor for performing the operations or methods described with reference to FIGS. 8 to 10. The training device may train the parameter transformation model to output information indicating a layer that may reduce a computation amount while maintaining a maximum inference accuracy in the process of transformation through lightweighting among all layers in a neural network model. The information indicating a layer to be lightened may be information indicating a layer to be replaced with a DS convolutional layer among a plurality of standard convolutional layers. According to an example embodiment, training may be performed to reduce a computation amount more greatly while minimizing a reduction in accuracy.

According to an example embodiment, the training device may train a machine learning model 990 (e.g., an original machine learning model and a lightweight model for each lightweighting level) for a target task and a parameter transformation model. The training device may add a lightweight layer to each layer that is subject to transformation in the original machine learning model for the target task. Thus, a temporary model for the target task may include a selection block 995 that selectively provides a path along either an original layer or a lightweight layer. In this case, a parameter (e.g., a kernel weight and a bias weight) of the temporary model may be used as ground truth (GT) data for a parameter transformation network 970.

According to an embodiment, the machine learning model 990 (e.g., a main neural network model) for the target task may include a head portion 991, a tail portion 999, and a series of selection blocks. The head portion 991 may be a block that adjusts (e.g., transforms) input data (e.g., an input image 901) to data of a channel count of a layer (e.g., a convolutional layer) included in a selection block. The tail portion 999 may be a block that adjusts data of a previous layer (e.g., a convolutional layer) to data of a channel count of output data (e.g., an output image 909).

The training device may train the parameter transformation network 970 after completing training the machine learning model 990 with a plurality of lightweighting levels. However, examples are not limited thereto, and the training device may train the machine learning model 990 and the parameter transformation network 970 jointly. For clarity, the training will be described by dividing it into training the machine learning model 990 that is lightened by any lightweighting level and training the parameter transformation network 970 for the lightweighting level.

As will be described below, the training device may first train the machine learning model 990 with the lowest lightweighting level, e.g., an original machine learning model. The training device may then train the machine learning model 990 (e.g., a lightweight model) corresponding to each lightweighting level while increasing the lightweighting level. In the training of a lightweight model, the training device may fix parameters of original layers (e.g., standard convolutional layers) and update only parameters of lightweight layers (e.g., DS convolutional layers). This is because the training of the original machine learning model completes updating original layers. The training of the machine learning model 990 for each lightweighting level by path selection will be described below.

In operation 810, the method may include selecting, based on a path selection parameter, one of a path along an original layer of an original machine learning model and a path along a lightweight layer added to the original layer. For example, at each iteration of training, the training device may select one of a path along an original layer of an original machine learning model and a path along a lightweight layer added to the original layer, based on a path selection parameter. For example, the training device may select a path along any one of the original layer (e.g., a standard convolutional layer) and the lightweight layer (e.g., a DS convolutional layer) included in the selection block, at a corresponding iteration. The path selection parameter may be a parameter indicating a probability of selecting each path. For example, a path selection parameter $\alpha_d$ indicating selecting a path along the DS convolutional layer, and a path selection parameter $\alpha_c$ indicating selecting a path along the standard convolutional layer may each be a real number that is greater than or equal to 0 and less than or equal to 1.

The training device may select a path that follows one of an original branch or a lightweight branch based on a result of binarizing the path selection parameter. A parameter $\beta_d$ binarized from the path selection parameter $\alpha_d$ and a parameter $\beta_c$ binarized from the path selection parameter $\alpha_c$ may each be an integer having a value of 1 or 0. The training device may perform a binarization that determines a parameter having a larger value to be 1 and a remaining parameter to be 0 from among path selection parameters corresponding to a plurality of branches individually. In an example case in which the path selection parameter $\alpha_d$ is greater than or equal to the path selection parameter $\alpha_c$, the training device may determine the binarized parameter $\beta_d$ corresponding to $\alpha_d$ to be 1 and the binarized parameter $\beta_c$ to be 0. In an example case in which the path selection parameter $\alpha_d$ is less than the path selection parameter $\alpha_c$, the training device may determine the binarized parameter $\beta_d$ to be 0 and the binarized parameter $\beta_c$ to be 1. The training device may select a path corresponding to a parameter having a value of 1. A feedforward value based on a result of the binarization may be expressed by Equation 1 below.

[Equation 1]

$$F_{out} = \beta_c \cdot \mathrm{Conv}(F_{in}) + \beta_d \cdot \mathrm{DS}(F_{in})$$

In Equation 1, Conv() denotes an operation according to a standard convolutional layer, DS() denotes an operation according to a DS convolutional layer, $F_{in}$ denotes a feature map input to a corresponding selection block, and $F_{out}$ denotes a feature map output as a result of an operation by a path selected according to Equation 1 above. The training device may perform forward propagation to paths selected based on the path selection parameters described above. As will be described below, since the path selection parameter $\alpha_d$ and the path selection parameter $\alpha_c$ are also updated during backpropagation of training, a path to be selected may vary at each iteration, even for the same lightweighting level.

According to an embodiment, the training device may determine a lightweighting level for any iteration based on a result of binarizing the path selection parameters. Since the lightweighting level indicates the number of lightweight layers, the number of paths $\sum_n \beta_d^n$ selected along a DS convolutional layer may be calculated as the lightweighting level.

In operation 830, the method may include updating a parameter of a layer included in the selected path and the path selection parameter. For example, the training device may update a parameter of a layer included in the selected path and the path selection parameter, using a first objective value that is calculated based on a temporary output calculated by propagating a training input to the selected path and a ground truth (GT) and a second objective value that is calculated based on a temporary computation amount and a target computation amount according to the selected path. In an example case in which the training input is a low-resolution input image 901, a GT 908 may be a high-resolution image corresponding to the low-resolution input image 901.

The first objective value may be a value indicating a measure of accuracy (e.g., image quality) for a target task of the machine learning model 990, which is, for example, a value corresponding to a difference between temporally output data (e.g., an output image 909) and the GT data (e.g., a GT image). The second objective value may be a value indicating a measure of a computation amount of the machine learning model 990, which is, for example, a value corresponding to a difference between a target computation amount 906 (e.g., target GOPs) and an accumulated computation amount 907 (e.g., accumulated GOPs). According to an embodiment, the accumulated computation amount 907 may be an accumulation (e.g., sum) of computation amounts (e.g., $g^1$ to $g^n$) according to a path selected from among a plurality of layers. The computation amounts may include, but is not limited to, a computation amount of a standard convolution operation in a case in which a standard convolutional layer is selected, and a computation amount of a DS convolution operation in a case in which a DS convolutional layer is selected. By the first objective value described above, the machine learning model 990 may be trained to increase accuracy based on a comparison between a GT image and an output image. By the second objective value, the machine learning model 990 may be trained to decrease a computation amount based on a comparison between a target computation amount (e.g., the target GOPs) and an actual computation amount (e.g., the accumulated GOPs).

In an example case in which a computation amount of the machine learning model 990 being trained is greater than the target computation amount, training may be performed to use a DS convolutional layer having a less computation amount. In an example case in which the accuracy of the machine learning model 990 being trained is low, training may be performed to use a standard convolutional layer having a relatively high accuracy. For example, in an example case in which the accuracy of the machine learning model 990 being trained is lower than a reference value, training may be performed to use a standard convolutional layer having a higher accuracy than the machine learning model 990.

According to an embodiment, a derivative of the path selection parameters in backpropagation may be expressed by Equation 2.

[Equation 2]

$$\partial \mathcal{L}/\beta_c = \partial \mathcal{L}/\alpha_c, \ \partial \mathcal{L}/\beta_d = \partial \mathcal{L}/\alpha_d$$

Therefore, even in an example case in which a path selection parameter binarized in the forward propagation is used, a path selection parameter before being binarized may be updated in backpropagation.

The training device may update the path selection parameters $\alpha_d$ and $\alpha_c$ and the parameters (e.g., kernel weight and bias weight) of the layer of the selected path until an objective function value (e.g., a total objective value based on the first objective value and the second objective value) described above converges. The path selection parameters $\alpha_d$ and $\alpha_c$ of each selection block 995 that have converged over iterations of training may indicate which one of a standard convolutional layer and a DS convolutional layer the corresponding selection block 995 is to select, at a corresponding lightweighting level. In this case, a layer that may reduce a computation amount without significantly reducing the accuracy of the original machine learning model for the target task may be transformed into a lightweight layer.

In operation 850, the method may include determining a GT lightweight parameter based on the lightweighting level corresponding to the target computation amount for the original parameter of the original machine learning model. For example, the training device may determine a lightweight parameter 995-1 converged by the update of the lightweight layer in the target computation amount as the GT lightweight parameter 995-1, based on the lightweighting level corresponding to the target computation amount for the original parameter of the original machine learning model. In an example case in which the training converges, the training device may generate training data including the lightweighting level, the GT lightweight parameter 995-1, the corresponding original parameter, and lightweight layer information 995-2. The generated training data may then be used to train the parameter transformation network 970.

According to an example embodiment, in a case of changing the target computation amount, the training device may determine a GT lightweight parameter 995-1 for a different lightweighting level corresponding to the changed target computation amount based on an iteration of the update of the changed target computation amount. For example, the original parameter may be determined through training, with no limit on the target computation amount (e.g., 906) or with a sufficiently large target computation amount. In an example case in which the target computation amount 906 is not present or is sufficiently large (e.g., larger than a reference amount), the training device may perform path selection and training of the machine learning model 990 based completely on the first objective value. In this case, training of the original machine learning model for the target task may be performed without any lightweighting. In an example case in which the target computation amount 906 is set or reduced, the training device may perform path selection and training of the machine learning model 990 based on an objective function value including the second objective value in addition to the first objective value. In this case, training of the lightweight model may be performed. The electronic device may determine a GT lightweight parameter 995-1 for a lightweighting level corresponding to the changed target computation amount 906, by a lightweight parameter converged by the parameter update in the changed target computation amount 906. Since the lightweighting level increases as the target computation amount 906 is further reduced, the training device may perform training of the lightweight model for each lightweighting level by adjusting the target computation amount 906.

In operation 870, the method may include training the parameter transformation model to output the GT lightweight parameter 995-1 determined for the lightweighting level from the original parameter. For example, the training device may train the parameter transformation model to output the GT lightweight parameter 995-1 determined for the lightweighting level from the original parameter. The training device may train the parameter transformation network 970 using the training data including the lightweighting level, the GT lightweight parameter 995-1, the corresponding original parameter, and the lightweight layer information 995-2, as described above. The training device may train the parameter transformation network 970 to output the GT lightweight parameter 995-1 and the GT lightweight layer information 995-2 from the original parameter and the lightweighting level.

Although an example where only a parameter of a lightweight layer is updated while a parameter of an original layer included in a lightweight model is fixed, during training of the lightweight model, has been described above with reference to FIG. 9, examples are not limited thereto. The training device may train the parameter transformation network 970 after performing forward propagation on a main neural network (e.g., the machine learning model 990). This is because an original parameter and the lightweight parameter 995-1, which are an input and an output of the parameter transformation network 970, are obtained in operation 850 described above. The training device may also update a parameter of the original layer along with a parameter of the lightweight layer during the training of the lightweight model. In this case, original parameters of the original machine learning model and original parameters of the lightweight model may be slightly different during the training process. In contrast, during the process of generating the lightweight model at an execution of an application, the same original parameter as that of the original machine learning model may be set in the original layer of the lightweight model. In this case, the original parameter may change during the training process and the original parameter may be maintained during the process of generating the lightweight model. However, because such a difference or error is trivial, GT data (e.g., GT parameters) generated through the training process in which the original parameter is changed may be used to train the parameter transformation network 970. In this case, a reduction in the accuracy of the lightweight model including a lightweight parameter generated by the parameter transformation network 970 may be small.

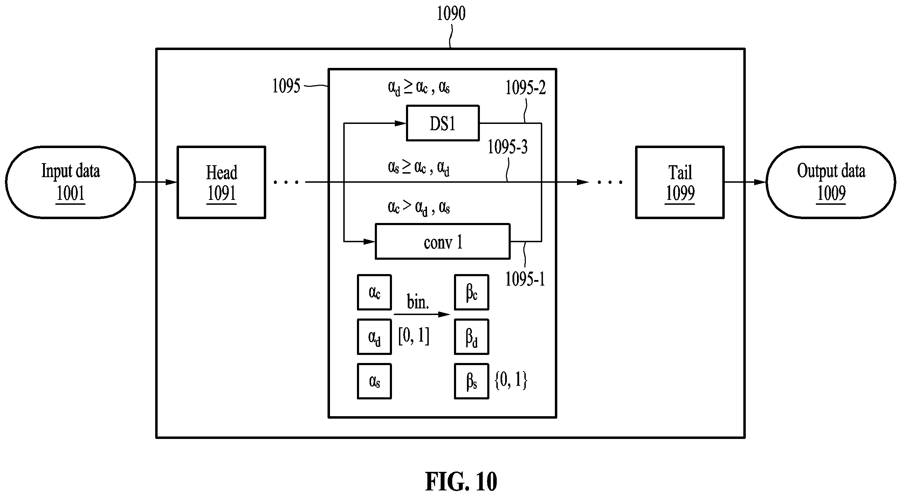

FIG. 10 is a diagram illustrating an additional example of training a machine learning model according to an example embodiment.

According to an example embodiment, the training device may further add a branch that skips a corresponding layer for each layer in a machine learning model 1090. Based on a path selection parameter, the training device may select one from among a path 1095-1 according to an original layer, a path 1095-2 according to a lightweight layer, or a path skip 1095-3. For example, in the machine learning model 1090, a selection block 1095 may further include a skip path, in addition to a path for a standard convolutional layer and a path for a DS convolutional layer described above. For example, the path selection parameter may include a first selection parameter $\alpha_c$ indicating selection of a path along an original layer, a second selection parameter $\alpha_d$ indicating selection of a path along a lightweight layer, and a third selection parameter $\alpha_s$ indicating whether to skip a convolution in a corresponding layer. The head portion 1091 and the tail portion 1099 have already been described above with reference to FIG. 9, and input data 1001 may be an input image and output data 1009 may be an output image.

The training device may binarize the first selection parameter $\alpha_c$, the second selection parameter $\alpha_d$, and the third selection parameter $\alpha_s$, respectively, in a similar way described above with reference to FIG. 9. A binarized parameter $\beta_s$ of the third selection parameter $\alpha_s$ may have a value of 0 or 1. For example, the training device may determine a binarized parameter $\beta_c$ to be 1 based on the first path selection parameter $\alpha_c$ being the largest within any selection block 1095, and the remaining parameters to be 0. The training device may determine a binarized parameter $\beta_d$ to be 1 based on the second path selection parameter $\alpha_d$ being the largest, and the remaining parameters to be 0. The training device may determine the binarized parameter $\beta_s$ to be 1 based on the third selection parameter $\alpha_s$ being the largest, and the remaining parameters to be 0.

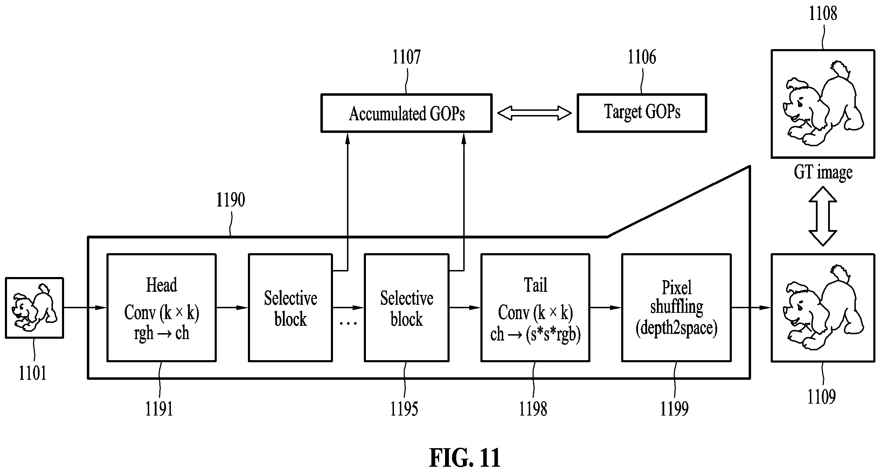

FIG. 11 is a diagram illustrating an example of training a machine learning model for super resolution (SR) according to an example embodiment.

According to an example embodiment, the training device may train a machine learning model 1190 to generate a super-resolution image 1109 from an input image 1101 based on an objective value. A head portion 1191, a selection block 1195, and a tail portion 1198 have already been described above with reference to FIGS. 9 and 10. According to an embodiment, the machine learning model 1190 may including a plurality of selection blocks 1195. The head portion 1191 may be, for example, a portion that transforms data of three channels (e.g., RGB) into data of a plurality of channels ch, and the tail portion 1198 may be, for example, a portion that transforms the data of the plurality of channels ch into data of $s \times s \times$ RGB dimensions for SR. In this case, s, which denotes a scaling factor for SR, may be an integer greater than or equal to 1. A pixel shuffling portion 1199 may be a portion that transforms the data output from the tail portion 1198 into a super-resolution image of ($s \times$ H, $s \times$ W, 3), which is a dimension of the super-resolution image.

Equation 3 is an example function of a first objective value. Equation 4 expresses a computation amount for each layer, and Equation 5 is an example function of a second objective value.

[Equation 3]

$$\mathcal{L}_{SR} = MAE$$

In Equation 3, a mean absolute error (MAE) may be calculated for a GT image 1108 and the image 1109 output from a machine learning model that is being trained.

[Equation 4]

$$GOPs_{curr} = \beta_c\, GOPs(conv) + \beta_d\, GOPs(DS\; conv)$$

In Equation 4, GOPs$_{curr}$ denotes a computation amount according to a selected path in each layer. GOPs(conv) denotes a computation amount of a standard convolution operation by a unit of GOPs, and GOPs(DSconv) denotes a computation amount for a DS convolution operation by a unit of GOPs.

[Equation 5]

$$\mathcal{L}_{GOPs} = \max\{0, g - g_{tg}\}$$

In Equation 5, g denotes an accumulated computation amount 1107 for the machine learning model, which is a sum of computation amounts for each layer according to Equation 4 above. $g_{tg}$ denotes a target computation amount 1106. The training device may train the machine learning model with an objective function value that is based on a difference between the accumulated computation amount 1107 and the target computation amount 1106 according to Equation 5. In a case in which the accumulated computation amount 1107 is less than the target computation amount 1106, a second objective value may be set to zero (0) because a computation amount of the machine learning model is already small enough. In this case, parameters of the machine learning model may be updated in a corresponding iteration, based only on the accuracy according to Equation 3.

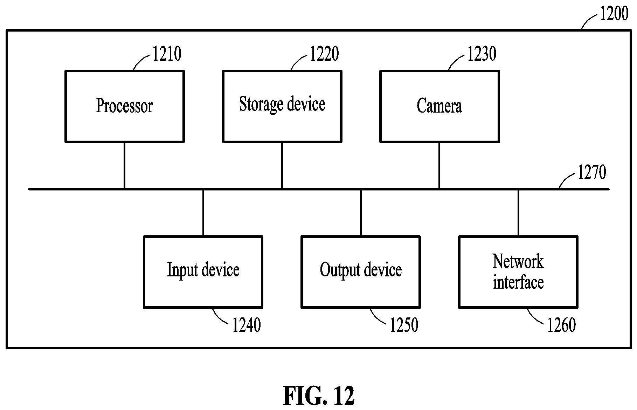

FIG. 12 is a diagram illustrating an example configuration of a computing device according to an example embodiment.

Referring to FIG. 12, a computing device 1200 may perform at least one of generating a lightweight model using a parameter transformation model described above or training the parameter transformation model. According to an example embodiment, the computing device 1200 may correspond to the electronic device 100 described above with reference to FIG. 1. The computing device 1200 may be, as non-limiting examples, an image processing device, a smartphone, a wearable device, a tablet computer, a netbook, a laptop, a desktop, a personal digital assistant (PDA), a set-top box, or a consumer electronics device. The computing device 1200 may include the features and functions of the electronic device 100 shown in FIG. 1.

Referring to FIG. 12, the computing device 1200 may include a processor 1210, a storage device 1220, a camera 1230, an input device 1240, an output device 1250, and a network interface 1260. The processor 1210, the storage device 1220, the camera 1230, the input device 1240, the output device 1250, and the network interface 1260 may communicate with each other via a communication bus 1270.

The processor 1210 may execute functions and instructions that are to be executed in the computing device 1200. For example, the processor 1210 may process instructions stored in the storage device 1220. The processor 1210 may perform one or more of the operations or methods described above with reference to FIGS. 1 to 11.

The storage device 1220 may store information or data required for the execution of the processor 1210. The storage device 1220 may include a computer-readable storage medium or a computer-readable storage device. The storage device 1220 may store instructions to be executed by the processor 1210 and may store related information while software or applications are being executed by the computing device 1200.

The camera 1230 may capture an image including a plurality of image frames. The captured image may be used to generate a super-resolution image using a machine learning model (e.g., a lightweight model).

The input device 1240 may receive an input from a user through a haptic, video, audio, or touch input. The input device 1240 may include, as non-limiting examples, a keyboard, a mouse, a touchscreen, a microphone, or any other device capable of detecting an input from a user and transferring the detected input.

The output device 1250 may provide an output from the computing device 1200 to a user via a visual, auditory, or tactile channel. The output device 1250 may include, as non-limiting examples, a display, a touchscreen, a speaker, a vibration generating device, or any other device capable of providing an output to a user. The output device 1250 may provide the user with an output that is based on an original machine learning model or a lightweight model. For example, the output device 1250 may display a super-resolution image generated based on the lightweight model. The output device 1250 may immediately display the super-resolution image with less delay. The network interface 1260 may communicate with external devices over a wired or wireless network.

According to an example embodiment, the computing device 1200 may immediately generate neural network models suitable for a desired lightweighting level without a need for separate training.

The example embodiments described herein may be implemented using hardware components, software components and/or combinations thereof. A processing device may be implemented using one or more general-purpose or special purpose computers, such as, for example, a processor, a controller, an arithmetic logic unit (ALU), a digital signal processor, a microcomputer, a field programmable gate array (FPGA), a programmable logic unit (PLU), a microprocessor, or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciated that a processing device may include multiple processing elements and multiple types of processing elements. For example, a processing device may include multiple processors or a processor and a controller. In addition, different processing configurations are possible, such as, parallel processors.

The software may include a computer program, a piece of code, an instruction, or some combination thereof, to independently or collectively instruct or configure the processing device to operate as desired. The software and/or data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described examples may be recorded in non-transitory computer-readable media including program instructions to implement various operations of the above-described examples. The media may also include, alone or in combination with the program instructions, data files, data structures, and the like. The program instructions recorded on the media may be those specially designed and constructed for the purposes of examples, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter.

The above-described hardware devices may be configured to act as one or more software modules in order to perform the operations of the above-described examples, or vice versa.

**Claims**

**1.** A processor-implemented method, comprising:

obtaining a first parameter of a first machine learning model;
obtaining a second parameter by transforming the first parameter based on a parameter transformation model according to a lightweighting level;

generating a second machine learning model, based on the second parameter, by replacing one or more layers of the first machine learning model with a lightweight layer according to the lightweighting level; and

performing an inference operation using the generated second machine learning model.

2. The method of claim 1, wherein the first machine learning model comprises:

a first convolutional layer,
wherein the second machine learning model comprises:
a second convolutional layer that is lighter than the first convolutional layer.

3. The method of claim 2, wherein the second convolutional layer has a smaller number of kernel weights than the first convolutional layer.

4. The method of claim 2 or 3, wherein the first convolutional layer is a standard convolutional layer, and the second convolutional layer is a depthwise separable (DS) convolutional layer.

5. The method of any one of the previous claims, wherein the obtaining of the first parameter comprises:

identifying the first machine learning model as a model required by an application;
selecting a standard convolutional layer from a plurality of layers of the first machine learning model; and
determining the first parameter of the selected standard convolutional layer.

6. The method of any one of the previous claims, further comprising:
determining the lightweighting level based on an available resource of an electronic device that is to perform the inference operation.

7. The method of any one of the previous claims, comprising:

identifying the first machine learning model as a model required by an application; and
determining the lightweighting level based on a memory usage required for implementing the first machine learning model and an available memory of an electronic device at a time point of execution of the application.

8. The method of any one of the previous claims, further comprising:
obtaining, from the lightweighting level and a plurality of first layers of the first machine learning model, information indicative of a layer to be lightened among the plurality of first layers and the second parameter to be applied to the layer to be lightened, based on the parameter transformation model.

9. The method of any one of the previous claims, wherein the first parameter is selected based on an input indicative of a layer to be lightened among a plurality of first layers of the first machine learning model.

10. The method of any one of the previous claims, wherein the generating the second machine learning model comprises: setting the second parameter in the lightweight layer, which replaces a first layer of the first machine learning model.

11. The method of any one of the previous claims, wherein the parameter transformation model comprises at least one of:

a neural network of a multi-layer perceptron (MLP) structure configured to output the second parameter from the first parameter;
a neural network comprising an encoder portion configured to output feature data from the first parameter and a decoder portion configured to output the second parameter from the feature data; or
a recurrent neural network (RNN) configured to output the second parameter for a corresponding first layer based on sequentially receiving first parameters of a plurality of first layers together with information of a previous layer of each first layer.

12. The method of any one of the previous claims, wherein the second parameter is determined by providing, to the parameter transformation model, first parameters of a plurality of convolutional layers selected from the first machine learning model, in a unit of a single layer or a plurality of layers.

13. The method of any one of the previous claims, wherein the performing of the inference operation comprises:

generating a high-resolution output image from a low-resolution input image using the second machine learning model.

14. A non-transitory computer-readable storage medium storing instructions that are executable by a processor to perform the method of claim 1.

15. An electronic device comprising:

a processor; and
a memory storing instructions,
wherein, when executed by the processor, the instructions cause the electronic device to:

obtain a first parameter of a first machine learning model;
obtain a second parameter by transforming the first parameter based on a parameter transformation model according to a lightweighting level;
generate a second machine learning model, based on the second parameter, by replacing one or more layers of the first machine learning model with a lightweight layer according to the lightweighting level; and
perform an inference operation using the generated second machine learning model.

**FIG. 1**

Start

Obtain original parameter of original machine learning model ⟋210

Determine parameter transformed from original parameter based on parameter transformation model, according to lightweighting level ⟋230

Generate, using transformed parameter, lightweight model by replacing one or more layers of original machine learning model with lightweight layer according to lightweighting level ⟋250

Perform inference operation using generated lightweight model ⟋270

End

**FIG. 2**

**FIG. 3**

FIG. 4

**FIG. 5**

**FIG. 6**

EP 4 583 002 A1

Lightweighting level 760

{ F, F, T, F } — 761

[0, n]

751 { conv1, conv2, conv3, conv4 }

convi → Parameter transformation network 770 → dwi

781 { dw1, dw2, dw3, dw4 }

Input image 791 → conv1 conv2 dw3 conv4 — 790 → Output image 792

**FIG. 7**

Start

810

Select, based on path selection parameter, one from between path along original layer of original machine learning model and path along lightweight layer added to original layer, at each iteration of training

830

Update parameter of layer included in selected path and path selection parameter, using first objective value that is calculated based on temporary output calculated by propagating training input to selected path and based on GT and second objective value that is calculated based on temporary computation amount and target computation amount according to selected path

850

Determine lightweight parameter converged by updating lightweight layer in target computation amount, as GT lightweight parameter according to lightweighting level corresponding to target computation amount for original parameter of original machine learning model

870

Train parameter transformation model to output GT lightweight parameter determined for lightweighting level from original parameter

End

**FIG. 8**

FIG. 9

**FIG. 10**

EP 4 583 002 A1

**FIG. 11**

**FIG. 12**

Europäisches
Patentamt
European
Patent Office
Office européen
des brevets

# EUROPEAN SEARCH REPORT

**Application Number**

EP 24 18 5381

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YIHUI HE ET AL: "Depth-wise Decomposition for Accelerating Separable Convolutions in Efficient Convolutional Neural Networks", ARXIV.ORG, CORNELL UNIVERSITY LIBRARY, 201 OLIN LIBRARY CORNELL UNIVERSITY ITHACA, NY 14853, 13 September 2023 (2023-09-13), XP091611901, * the whole document * | 1-15 | INV. G06N3/044 G06N3/045 G06N3/0464 G06N3/0475 G06N3/0495 G06N3/084 G06N3/0985 |

-----

**TECHNICAL FIELDS SEARCHED (IPC)**

G06N

The present search report has been drawn up for all claims

| Place of search | Date of completion of the search | Examiner |
|---|---|---|
| The Hague | 13 December 2024 | Szymanski, Francois |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)